# EUROPÄISCHE PATENTSCHRIFT

(11) **EP 2 127 944 B1**
(45) Veröffentlichungstag und Bekanntmachung des Hinweises auf die Patenterteilung: **17.04.2013**
(21) Anmeldenummer: 09161323.2
(22) Anmeldetag: 28.05.2009
(51) Int. Cl.: B60Q 1/08, B60Q 1/14, G06K 9/00

(54) **Verfahren und Vorrichtung zum Steuern der Lichtabgabe eines Frontscheinwerfers eines Fahrzeugs**
Method and device for controlling the light emission of a front headlamp of a vehicle
Procédé et dispositif de commande de l'émission de lumière d'un phare de véhicule

(30) Priorität: 30.05.2008 DE 102008025947
(43) Veröffentlichungstag der Anmeldung: 02.12.2009
(60) Teilanmeldung: 12174003.9
(73) Patentinhaber: Hella KGaA Hueck & Co., 59552 Lippstadt (DE)
(72) Erfinder: Hoffmann, Ingo, 13089 Berlin (DE)
(74) Vertreter: Schaumburg, Thoenes, Thurn, Landskron, Eckert

(56) Entgegenhaltungen:
- EP-A- 1 780 462
- EP-A- 1 935 716
- DE-A1- 10 060 734
- DE-A1-102006 055 904
- DE-A1-102007 048 717
- US-A1- 2008 231 195

## Beschreibung

Die Erfindung betrifft ein Verfahren und eine Vorrichtung zum Steuern der Lichtabgabe mindestens eines Frontscheinwerfers eines Fahrzeugs, bei denen mindestens ein Bild mit einer Abbildung eines Bereichs vor dem Fahrzeug erfasst wird. Im erfassten Bild wird mindestens eine Abbildung mindestens eines Objekts detektiert und das Objekt wird klassifiziert. Die Lichtabgabe des Frontscheinwerfers wird abhängig von dem klassifizierten Objekt gesteuert.

Aus dem Dokument DE 100 60 734 A1 ist ein System für ein Kraftfahrzeug bekannt, bei dem Verkehrsschilder mittels einer Kamera erfasst und die Scheinwerfer des Kraftfahrzeugs so angesteuert werden, dass in bestimmten Verkehrssituationen die Schilder gezielt beleuchtet werden.

Aus dem Dokument DE 10 2006 041 857 A1 ist ein System bekannt, bei dem für die Verkehrssicherheit relevante Objekte erkannt und Lichtmuster zur Anzeige von Hinweisen auf diese Objekte auf die Fahrbahn projiziert werden. Vorzugsweise wird der Typ des ermittelten relevanten Objekts durch das Lichtmuster dem Fahrzeugführer des Fahrzeugs angezeigt.

Aus dem Dokument EP 1 780 462 A1 ist ein Frontscheinwerfer für ein Fahrzeug bekannt, mit dessen Hilfe die Blendung anderer Verkehrsteilnehmer wirkungsvoll vermieden werden kann.

Aus dem Dokument US 6,993,255 B2 ist ein System zur adaptiven Beleuchtung insbesondere zum Einsatz in Fahrzeugen bekannt.

Aus dem Dokument DE 103 36 681 B4 ist ein Kraftfahrzeug mit einer Einrichtung zur Umfelderfassung bekannt, die mindestens ein im Umfeld befindliches Objekt ermittelt. Es ist eine Beleuchtungseinrichtung zur individuellen Beleuchtung des Objekts vorgesehen.

Trotz einer Vielzahl bekannter Systeme zur gezielten Beleuchtung von Verkehrsschildern mit Hilfe von Zusatzscheinwerfern tritt das Problem auf, dass Verkehrsschilder zu stark beleuchtet werden können und der Fahrzeugführer des Fahrzeugs geblendet werden kann oder dass das Verkehrsschild zu gering beleuchtet wird. Ferner tritt das Problem auf, dass bei der Bildverarbeitung von Bildern mit einer Abbildung eines Verkehrsschilds mit einer sehr großen Helligkeit des vom Verkehrsschild reflektierten Lichts zusätzliche Maßnahmen bei der Bildaufnahme und/oder Bildauswertung getroffen werden müssen, um eine erforderliche Weiterverarbeitung der Bilddaten der Abbildung des Objekts durchführen zu können. Dies ist insbesondere dann erforderlich, wenn die Abbildung des Objekts von einem Verkehrszeichenerkennungsverfahren weiterverarbeitet wird. Ferner tritt bei zu geringer Helligkeit der Abbildung des Objekts das Problem auf, dass für die Klassifizierung des Objekts erforderliche Informationen nicht in ausreichendem Maß zur Verfügung stehen und insbesondere bei der Weiterverarbeitung der Bilddaten der Abbildung des Objekts durch ein Verkehrszeichenerkennungsverfahren eine ungenaue oder falsche Erkennung erfolgen kann.

Aufgabe der Erfindung ist es, ein Verfahren und eine Vorrichtung zum Steuern der Lichtabgabe mindestens eines Frontscheinwerfers eines Fahrzeugs anzugeben, bei denen auf einfache Art und Weise eine geeignete Lichtabgabe der Frontscheinwerfer des Fahrzeugs erreicht wird.

Diese Aufgabe wird durch ein Verfahren zum Steuern der Lichtabgabe mindestens eines Frontscheinwerfers eines Fahrzeugs mit den Merkmalen des Patentanspruchs 1 und durch eine Vorrichtung mit den Merkmalen des nebengeordneten Vorrichtungsanspruchs gelöst. Vorteilhafte Weiterbildungen der Erfindung sind in den abhängigen Patentansprüchen angegeben.

Durch ein Verfahren und durch eine Vorrichtung zum Steuern der Lichtabgabe mindestens eines Frontscheinwerfers eines Fahrzeugs wird erreicht, dass lichtreflektierende Objekte, d. h. Objekte mit Reflektoren, auf geeignete Art und Weise mit Hilfe des von dem mindestens einen Frontscheinwerfer des Fahrzeugs abgegebenen Lichts beleuchtet werden, sodass weder eine Blendung des Fahrzeugsführers des Fahrzeugs durch das reflektierte Licht noch eine unzureichende Beleuchtung des Objekts erfolgt. Besonders vorteilhaft ist es, dass kein Zusatzscheinwerfer oder keine separate Lichtquelle zur gezielten Beleuchtung des Objekts vorhanden sein muss sondern die Lichtabgabe des Frontscheinwerfers des Fahrzeugs derart gesteuert wird, dass das Objekt korrekt beleuchtet wird.

Bei einer vorteilhaften Weiterbildung werden Objekte in den erfassten Bildern mit Hilfe eines von einer Verarbeitungseinheit abgearbeiteten Bildverarbeitungsverfahrens und/oder eines Verkehrszeichenerkennungsverfahrens detektiert. Diese Verfahren detektierten Abbildungen von Objekten in mindestens einem von einer Bilderfassungseinheit aufgenommenen Bild. Als Bilderfassungseinheit ist insbesondere eine frontseitig angeordnete Stereokamera geeignet. Auf diese Art und Weise kann mit relativ einfachen Mitteln ein Bild mit der Abbildung des Bereichs vor dem Fahrzeug erfasst und diesem Bild entsprechende Bilddaten weiterverarbeitet werden. Mit Hilfe der Stereokamera kann zusätzlich die Entfernung zwischen Kamera und Objekt ermittelt werden. Mit der bekannten Entfernung kann das von den Frontscheinwerfern des Fahrzeugs abgestrahlte Licht derart gesteuert werden, dass das Objekt korrekt beleuchtet wird. Alternativ kann die Entfernung des Fahrzeugs zum Objekt mit Hilfe eines anderen geeigneten Entfernungsmesssystems ermittelt werden. Dann kann anstatt der Stereokamera eine andere geeignete Bilderfassungseinheit eingesetzt werden, insbesondere mindestens eine Monokularkamera.

Mit Hilfe einer Bilderfassungseinheit kann eine Bildfolge von Bildern mit Abbildungen des Bereichs vor dem Fahrzeug aufgenommen werden, wobei die Bilderfassungseinheit Bilddaten bildweise erzeugt, die mit Hilfe einer Verarbeitungseinheit weiterverarbeitet werden. Dabei ist es vorteilhaft, nur einige Bilder der mit Hilfe der Bilderfassungseinheit erfassten Bilder einer Bildfolge zum Steuern der Lichtabgabe des mindestens einen Frontscheinwerfers des Fahrzeugs zu verarbeiten. Dadurch kann der Verarbeitungsaufwand der Verarbeitungseinheit zur Steuerung der Lichtabgabe des Frontscheinwerfers des Fahrzeugs erforderlichenfalls verringert werden.

Bei einer weiteren vorteilhaften Weiterbildung der Erfindung wird mit Hilfe einer weiteren Lichtquelle Infrarotlicht erzeugt und in den Erfassungsbereich einer Bilderfassungseinheit abgestrahlt. Das von der Lichtquelle abgestrahlte und von dem lichtreflektierenden Objekt reflektierte Infrarotlicht wird durch die Bilderfassungseinheit erfasst und separat oder zusammen mit weiteren Bilddaten zur Detektion von lichtreflektierenden Objekten weiterverarbeitet. Dadurch kann eine zusätzliche Beleuchtung des lichtreflektierenden Objekts erfolgen, ohne dass der Fahrzeugführer des Fahrzeugs oder Fahrzeugführer entgegenkommender Fahrzeuge von dem nicht sichtbaren abgestrahlten Infrarotlicht geblendet werden. Das Infrarotlicht dient insbesondere zur Beleuchtung des Nahbereichs vor dem Fahrzeug.

Bei einer anderen Weiterbildung der Erfindung werden mit Hilfe einer Bilderfassungseinheit nacheinander mehrerer Bilder einer Bildfolge erfasst, in denen nacheinander jeweils eine Abbildung desselben Objekts detektiert wird. Ein Objektverfolgungsverfahren wird zur Verfolgung des Objekts über mehrere Bilder durchgeführt. Ein solches Objektverfolgungsverfahren wird auch als Trackingverfahren bezeichnet.

Als lichtreflektierende Objekte werden Objekte mit Reflektoren, wie Verkehrsschilder, Leitpfosten und/oder Warnbaken, detektiert. Die Verkehrsschilder haben länderabhängig verschieden aufgebaute Reflektoren, insbesondere ist die Vorderseite eines Verkehrsschildes mit einem stark lichtreflektierenden Material, insbesondere einer stark lichtreflektierenden Folie, beschichtet. Alternativ oder zusätzlich kann das Verkehrszeichen aus Retroreflektoren oder aus anderen Reflektorelementen zusammengesetzt sein.

Ferner ist es vorteilhaft, einen Sollwert oder Sollbereich voreinzustellen. Dann kann überprüft werden, ob die ermittelte Helligkeit der Abbildung des Objekts den Sollwert bzw. den Sollbereich überschreitet oder nicht. Der Sollbereich ist vorzugsweise durch einen oberen und einen unteren Sollwert begrenzt. Dabei ist es vorteilhaft, den Sollwert bzw. den Sollbereich abhängig von der ermittelten Helligkeit der Umgebung zu verändern. Dadurch kann der Sollwert bzw. Sollbereich an die Lichtempfindlichkeit des Auges des Fahrzeugführers oder anderer Verkehrsteilnehmer angepasst werden.

Die Lichtabgabe des Frontscheinwerfers des Fahrzeugs wird verringert, wenn die ermittelte Helligkeit der Abbildung des lichtreflektierenden Objekts den voreingestellten Sollwert überschreitet oder außerhalb des voreingestellten Sollbereichs liegt. Die Lichtabgabe des Frontscheinwerfers kann insbesondere durch eine Reduzierung der Intensität des durch den Frontscheinwerfer abgestrahlten Lichts, durch eine Deaktivierung einzelner Lichtquellen des Frontscheinwerfers und/oder durch eine Änderung der Lichtverteilung des durch den Frontscheinwerfer abgestrahlten Lichts reduziert werden.

Die Lichtabgabe des Frontscheinwerfers des Fahrzeugs wird erhöht, um mehr Licht auf das Objekt abzustrahlen und insbesondere die Helligkeit der Abbildung des Objekts in nachfolgend erfassten Bildern zu erhöhen, wenn die ermittelte Helligkeit der Abbildung des lichtreflektierenden Objekts den voreingestellten Sollwert unterschreitet oder einen voreingestellten Sollbereich unterschreitet. Die Lichtabgabe des Frontscheinwerfers bzw. die Beleuchtung des Objekts kann durch eine Erhöhung der Intensität des durch den Frontscheinwerfer (26) abgestrahlten Lichts, durch das Zuschalten mindestens einer weiteren Lichtquelle und/oder durch eine Änderung der Lichtverteilung des durch den Frontscheinwerfer (26) abgestrahlten Lichts erhöht werden. Nach der Änderung des vom Frontscheinwerfer abgestrahlten Lichts kann die Helligkeit der Abbildung desselben Objekts in einem weiteren Bild wiederholt ermittelt werden. Dann kann überprüft werden, ob der ermittelte Helligkeitswert einen voreingestellten Sollwert oder einen voreingestellten Sollbereich unterschreitet und/oder überschreitet. Abhängig davon kann die Intensität des durch die Frontscheinwerfer des Fahrzeugs abgestrahlten Lichts und/oder die Lichtverteilung des von den Frontscheinwerfern des Fahrzeugs abgestrahlten Lichts entsprechend geändert werden. Alternativ kann die Lichtabstrahlung der Frontscheinwerfer abhängig von der ermittelten Helligkeit der Abbildung mehrerer detektierter Objekte gesteuert werden.

Weiterhin ist es vorteilhaft, nachdem festgestellt wird, dass sich das detektierte Objekt nicht mehr im Erfassungsbereich einer Bilderfassungseinheit des Fahrzeugs befindet, mindestens ein weiteres lichtreflektierendes Objekt zu detektieren. Die Lichtabgabe des mindestens einen Frontscheinwerfers des Fahrzeugs wird dann abhängig von der ermittelten Helligkeit der Abbildung des weiteren Objekts oder der weiteren Objekte gesteuert.

Als Bilderfassungseinheit eignet sich insbesondere eine bekannte Fahrzeugkamera. Die Bilderfassungseinheit kann insbesondere eine monokulare Kamera, mehrere monokulare Kameras, ein Stereokamerasystem oder mehrere Stereokamerasysteme umfassen, wobei die einzelnen Kameras Bilddaten von Graustufenbildern oder Farbbildern erzeugen. Besonders vorteilhaft ist die Verwendung einer Kamera mit mindestens einem CMOS-Bilderfassungssensor, der vorzugsweise Graustufenbilder erzeugt. Beispielsweise hat die Bilderfassungseinheit einen Active-Pixel-Sensor als Bilderfassungssensor.

Die durch den unabhängigen Vorrichtungsanspruch spezifizierte Vorrichtung kann in gleicher Weise weitergebildet werden, wie das Verfahren nach Anspruch 1. Insbesondere kann die Vorrichtung mit den in den abhängigen Patentansprüchen angegebenen Merkmalen bzw. durch entsprechende Vorrichtungsmerkmale weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: eine schematische Darstellung einer Verkehrssituation mit einem Fahrzeug und einem seitlich der Fahrbahn angeordnetem Verkehrszeichen als Seitenansicht; und
- Figur 2: einen Ablaufplan für die Optimierung der Beleuchtung eines Verkehrzeichens.

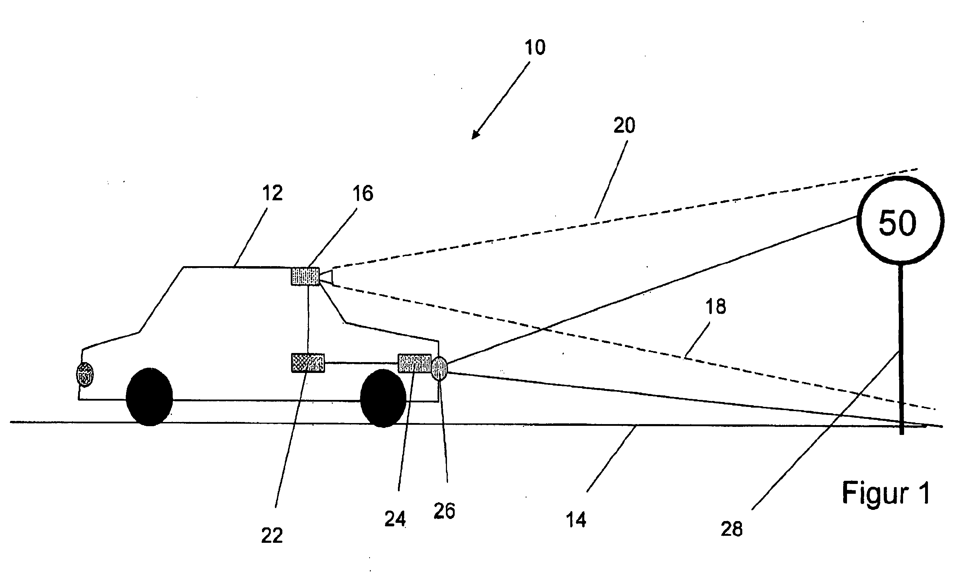

In Figur 1 ist eine Verkehrssituation gemäß einer ersten Ausführungsform der Erfindung dargestellt, bei der ein Fahrzeug 12 dargestellt ist, das entlang dem Fahrbahnverlauf einer Fahrbahn 14 fährt. Das Fahrzeug 12 hat eine Frontkamera 16, die eine Bildfolge mit Bildern eines Erfassungsbereichs vor dem Fahrzeug 12 erfasst. Der Erfassungsbereich ist in Figur 1 durch die Strichlinien 18, 20 begrenzt. Mit Hilfe der Frontkamera 16 werden somit Bilder mit Abbildungen von im Erfassungsbereich vorhandenen Objekten erfasst, die als Bilddaten von der Frontkamera 16 zu einer im Fahrzeug 12 angeordneten Verarbeitungseinheit 22 übertragen werden. Mit Hilfe der Frontkamera 16 werden die im Erfassungsbereich vor dem Fahrzeug 12 vorhandenen Objekte, wie das in Figur 1 dargestellte seitlich der Fahrbahn 14 angeordnete Verkehrsschild 28, auf dem ein Verkehrszeichen abgebildet ist erfasst. Die Bilddaten der Abbildung des Objekts 28 werden dann von der Verarbeitungseinheit 22 verarbeitet, wobei das Objekt 28 ausgehend von dessen Abbildung als Objekt detektiert und dessen Objekttyp klassifiziert wird. Mit Hilfe von durch die Verarbeitungseinheit 22 abgearbeiteten Verkehrszeichenerkennungsverfahren kann ermittelt werden, um was für ein Verkehrschild es sich bei dem detektierten Verkehrsschild 28 handelt. In gleicher Weise werden als Objekte detektierte auf der Fahrbahn 14 vorausfahrende Fahrzeuge und auf einer Gegenfahrbahn der Fahrbahn 14 entgegenkommende Fahrzeuge mit Hilfe von durch die Verarbeitungseinheit 22 abgearbeiteten Bewertungs- und Klassifizierungsverfahren klassifiziert.

Die Frontkamera 16 ist vorzugsweise eine Stereokamera, mit der die Entfernung eines Objekts zur Stereokamera 16 und somit die Position von erfassten Objekten in einem Fahrzeugkoordinatensystem bestimmt werden kann. Für die detektierten Objekte können jeweils Objektparameter ermittelt werden. Solche Objektparameter können eine für das jeweilige Objekt ermittelte Objektklasse, die dreidimensionale Position des Objekts, die dreidimensionale Bewegungsrichtung des Objekts, die Geschwindigkeit des Objekts und/oder die Dauer der Beobachtung des Objekts in einer mit Hilfe der Frontkamera 16 des Fahrzeugs 12 erfassten Bildfolge sein. Diese Objektparameter können als Eingangsgrößen für ein Bewertungsverfahren zur Klassifizierung des Objekts durch die Verarbeitungseinheit 22 verwendet werden.

Anhand der ermittelten Objekte wird die optimale Lichtverteilung für die Frontscheinwerfer 26 ausgewählt. Informationen über die ausgewählte bzw. festgelegte Lichtverteilung wird von der Verarbeitungseinheit 22 zu einem Lichtsteuermodul 24 übertragen, das eine den übermittelten Informationen entsprechende Lichtverteilung abhängig von den verfügbaren konkreten Einstellmöglichkeiten der Frontscheinwerfer 26 durch eine entsprechende Ansteuerung der Frontscheinwerfer 26 erzeugt.

Handelt es sich bei dem detektierten Objekt 28 um ein Verkehrschild, einen Leitpfosten, eine Warnbake, eine Warntafel oder ein anderes reflektierendes Objekt, so können drei Fälle auftreten:
1. Das Objekt 28 ist nur unzureichend beleuchtet, so dass der Fahrer des Fahrzeuges 12 dieses eventuell nicht oder erst zu spät erkennen kann.
2. Das Objekt 28 wird durch sie Frontscheinwerfer 26 so stark angestrahlt, dass der Fahrer des Fahrzeugs 12 durch das von dem Objekt 28 reflektierte Licht geblendet wird und somit die Verkehrsicherheit gefährdet sein kann.
3. Das Objekt 28 wird von dem durch die Frontscheinwerfer 26 abgestrahlten Licht so beleuchtet, dass es weder den Fahrer des Fahrzeuges 12 blendet, noch dass das Verkehrsschild 28 unzureichend beleuchtet ist.

Somit ist der dritte Fall der gewünschte Zustand und der erste und der zweite Fall sollen vermieden werden.

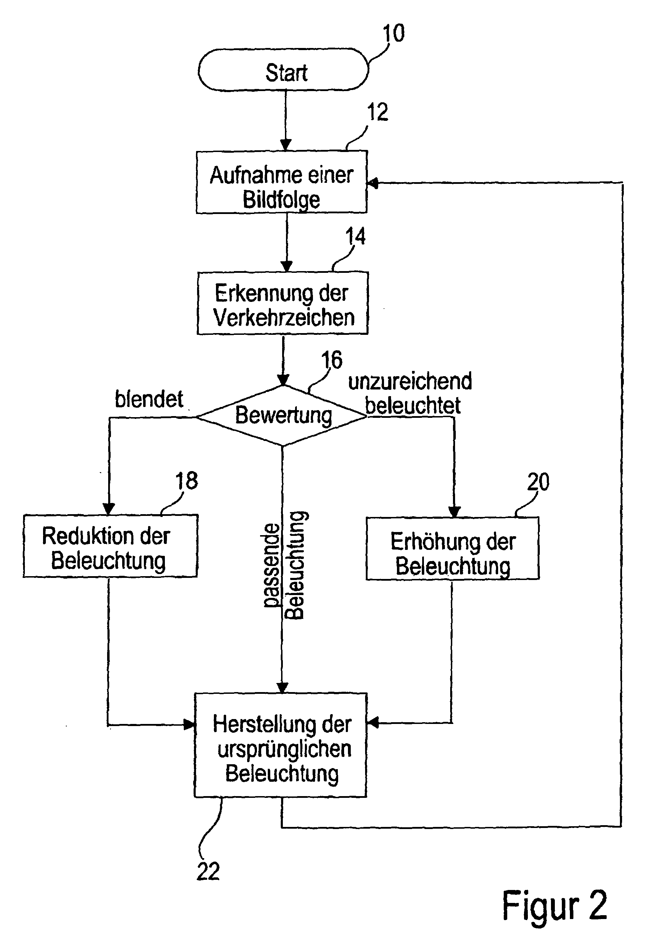

In Figur 2 ist ein Ablaufplan für die Optimierung der Beleuchtung eines Verkehrschilds 28 gezeigt. Nachdem im ersten Schritt S 10 das Verfahren gestartet wurde, wird im Schritt S12 von der Frontkamera 16 eine Bildfolge von Bildern mit Abbildungen der Objekte im Erfassungsbereich vor dem Fahrzeug 12 aufgenommen. Im nächsten Schritt S14 wird aus der Bildfolge ein Bild ausgewählt und mit Hilfe in der Verarbeitungseinheit 22 hinterlegter Bildverarbeitungs- und/oder Verkehrschildererkennungsverfahren Verkehrschilder 28 detektiert. Hierbei muss nicht zwangsläufig jedes Bild der von der Frontkamera 16 aufgenommenen Bildfolge verarbeitet werden, sondern es können auch nur Bilder in einem gewissen zeitlichen Abstand ausgewählt werden. Jedoch sind auch Ausführungsformen möglich, bei denen jedes Bild der Bildfolge zur Detektierung von Objekten und gegebenenfalls zur Verkehrszeichenerkennung verarbeitet wird. Zusätzlich kann bei der Erkennung der Verkehrzeichen Infrarot-Beleuchtung im Nahbereich (NIR-Beleuchtung) eingesetzt werden. Mit Hilfe einer in der Verarbeitungseinheit 22 hinterlegten Trackingfunktion können die Abbildungen der Verkehrschilder 28 in den Bildern der durch die Frontkamera 16 aufgenommen Bildfolge nachverfolgt werden. Ferner kann die genaue Position der Verkehrschilder 28 im Bereich vor dem Fahrzeug mit geeigneten Entfernungsmessverfahren bestimmt werden.

Anschließenden wird in Schritt S 16 die tatsächliche Helligkeit des von dem detektierten Verkehrschild 28 reflektierten Lichtes ermittelt und mit einem in der Verarbeitungseinheit 22 voreingestellten Sollwert verglichen. Dieser Sollwert kann fest vorgegeben sein oder in Abhängigkeit von der Umgebungshelligkeit variiert werden. Hierzu wird die Umgebungshelligkeit mittels eines nicht dargestellten Sensorensystems oder aus dem durch die Frontkamera 16 aufgenommen Bild ermittelt. Vorzugsweise wird nicht ein einzelner Sollwert vorgegeben, sondern ein Bereich vorgegeben, in dem die tatsächliche Helligkeit des von dem detektierten Verkehrschild 28 reflektierten Lichtes liegen soll. Dieser Bereich wird durch einen unteren und einen oberen Sollwert begrenzt.

Wird in Schritt S 16 ermittelt, dass die ermittelte tatsächliche Helligkeit größer als der Sollwert bzw. der obere Sollwert ist blendet das Verkehrschild 28 den Fahrer des Fahrzeugs 12. Dadurch kann die Verkehrssicherheit gefährdet werden. Dann werden im Schritt S 18 mit Hilfe der Verarbeitungseinheit 22 über die Lichtsteuermodule 24 die Frontscheinwerfer 26 des Fahrzeuges 12 derart angesteuert, dass eine Blendung durch das von dem Verkehrschild 28 reflektierte Licht vermieden wird. Hierzu kann beispielweise die Intensität des durch die Frontscheinwerfer 26 ausgesandten Lichts reduziert, einzelne Leuchtelemente, wie zum Beispiel einzelne LEDs in einem LED-Array, deaktiviert und/oder die Lichtverteilung des durch die Fronscheinwerfer 26 abgestrahlten Lichts mit Hilfe optischer Elemente geändert werden. Durch die Auswahl bzw. Anordnung mindestens eines optischen Elements oder der Kombination mehrerer optischer Elemente zur Beeinflussung der Lichtverteilung kann beispielweise eine Lichtfigur gezielt ausgewählt und eingestellt werden. Solche Lichtfiguren sind beispielsweise aus dem Dokument EP 0935728 B1 bekannt. Dabei kann zur Erzeugung von Lichtfiguren insbesondere die VARIOX® Technologie der Anmelderin verwendet werden. Während sich das Fahrzeug 12 dem Verkehrsschild 28 nähert kann die Lichtverteilung des durch die Frontscheinwerfer 26 abgestrahlten Lichts kontinuierlich auf die relative Positionsänderung der Position des Fahrzeugs 12 in Bezug auf das Verkehrsschild 28 angepasst werden.

Wird in Schritt S 16 jedoch ermittelt, dass die ermittelte tatsächliche Helligkeit kleiner als der Sollwert bzw. der untere Sollwert ist, wird das Verkehrschild 28 nicht ausreichend beleuchtet. Der Fahrer des Fahrzeugs 12 kann somit das Verkehrsschild 28 eventuell nicht oder erst zu spät erkennen, wodurch die Verkehrsicherheit gefährdet sein kann. Werden die aufgenommenen Bilder zusätzlich von einem Verkehrszeichenerkennungsverfahren verarbeitet, ist durch die unzureichende Beleuchtung des Verkehrsschildes die Erkennungswahrscheinlichkeit verringert, so dass eine korrekte Erkennung des Verkehrszeichens nicht oder nur mit geringer Erkennungswahrscheinlichkeit möglich ist. Die Verarbeitungseinheit 22 steuert dann im Schritt S20 über die Lichtsteuermodule 24 die Frontscheinwerfer 26 des Fahrzeuges 12 derart an, dass das Verkehrsschild 28 durch das von den Frontscheinwerfern 26 abgestrahlte Licht ausreichend beleuchtet wird. Hierzu kann beispielsweise die Intensität des durch die Frontscheinwerfer 26 ausgesandten Lichts erhöht werden, indem beispielsweise einzelne Lichtquellen, insbesondere LEDs in einem Array und/oder Kurvenlicht, zugeschaltet und/oder die Lichtverteilung des durch die Fronscheinwerfer 26 abgestrahlten Lichts durch optische Elemente geändert werden. Eine Veränderung der Lichtverteilung kann beispielweise durch die Wahl einer geeigneten Lichtfigur erfolgen. Solche Lichtfiguren sind beispielsweise aus dem Dokument EP 0935728 B1 bekannt und können insbesondere mit der VARIOX® Technologie der Anmelderin erzeugt werden. Während sich das Fahrzeug 12 dem Verkehrsschild 28 nähert kann die Lichtverteilung des durch die Frontscheinwerfer 26 abgestrahlten Lichts kontinuierlich oder schrittweise auf die Position des Fahrzeugs 12 in Bezug auf das Verkehrsschild 28 angepasst werden.

Wird im Schritt S 16 jedoch festgestellt, dass das Verkehrschild 28 von dem durch die Frontscheinwerfer 26 abgestrahlten Licht so beleuchtet ist, dass es weder den Fahrer des Fahrzeuges 12 blendet noch dass das Verkehrsschild 28 unzureichend beleuchtet ist. Somit liegt die tatsächliche Helligkeit des von dem Verkehrsschild 28 reflektierten Lichts zwischen dem unteren und den oberen Sollwert bzw. sie entspricht dem Sollwert. Eine Anpassung der Beleuchtung des Verkehrsschildes 28 ist somit nicht erforderlich.

Nachdem das Fahrzeug 12 das Verkehrschild 28 passiert hat, wird in Schritt S22 die ursprüngliche Einstellung der Frontscheinwerfer 26 wieder hergestellt. Anschließend wird der Ablauf im Schritt S 12 fortgesetzt und der nachfolgende Ablauf wird für mindestens ein weiteres Objekt wiederholt. Es wird gemäß dem beschriebenen Ablauf ein neues reflektierendes Objekt detektiert und die Beleuchtung dieses Objektes optimiert.

Alternativ kann in Schritt S22 auf eine Wiederherstellung der ursprünglichen Einstellung der Frontscheinwerfer 26 verzichtet werden und direkt eine neue optimale Einstellung der Frontscheinwerfer 26 für die Beleuchtung eines neu detektierten reflektierenden Objekts ermittelt werden.

Alternativ kann das Verfahren dahingehend abgewandelt werden, dass vor Schritt S22 zu Schritt S 12 zurück verzweigt wird und in einem nachfolgendem Bild der Bildfolge die Abbildung desselben Verkehrsschildes 28 detektiert und die Helligkeit des von dem Verkehrsschild 28 reflektierten Lichts bestimmt wird. Anschließend wird erneut in den nachfolgenden Schritten S 14 bis S20 die Beleuchtung des Verkehrsschildes 28 optimiert wird, sofern die Beleuchtung des Verkehrschildes 28 nach dem ersten Durchlauf des Verfahrens noch nicht korrekt war. Dieser Verfahrensablauf kann solange wiederholt werden, bis das Verkehrsschild 28 passiert wurde. Auf diese Weise wird eine Regelung der Lichtabgabe der Frontscheinwerfer 26 erreicht. Nach dem Passieren des Verkehrsschildes 28 wird der Ablauf mit Schritt S22 fortgesetzt.

Im Ausführungsbeispiel wird die Optimierung der Beleuchtung eines Verkehrsschildes 28 beschrieben. Alternativ kann aber auch die Beleuchtung mehrerer im Erfassungsbereich der Frontkamera 16 detektierter reflektierender Objekte parallel optimiert werden. Dazu wird die Helligkeit der Abbildung jedes Objekts ermittelt und die Lichtabstrahlung der Frontscheinwerfer 26 auf das jeweilige Objekt und/oder auf die Objekte bei einer ermittelten zu großen Helligkeit reduziert und bei einer ermittelten zu geringen Helligkeit erhöht.

## Patentansprüche

1. Verfahren zum Steuern der Lichtabgabe mindestens eines Frontscheinwerfers eines Fahrzeugs,
bei dem mindestens ein Bild mit einer Abbildung eines Bereichs vor dem Fahrzeug (12) erfasst wird,
im erfassten Bild mindestens eine Abbildung mindestens eines Objekts detektiert wird,
überprüft wird, ob das Objekt (28) ein Objekt mit einem Reflektor oder ein selbstleuchtendes Objekt ist,
zumindest dann die Helligkeit der Abbildung des Objekts (28) ermittelt wird, wenn das Objekt (28) ein Objekt mit einem Reflektor ist, **dadurch gekennzeichnet, daß**
die Lichtabgabe des mindestens einen Frontscheinwerfers (26) des Fahrzeugs (12) abhängig von der ermittelten Helligkeit der Abbildung des mindestens einen Objekts (28) mit einem Reflektor gesteuert wird,
wobei die Intensität des durch den Frontscheinwerfer (26) abgestrahlten Lichts erhöht wird, wenn die ermittelte Helligkeit der Abbildung des Objekts mit einem Reflektor einen voreingestellten Sollwert oder einen voreingestellten Sollbereich unterschreitet, und wobei die Intensität des durch den Frontscheinwerfer (26) abgestrahlten Lichts verringert wird, wenn die ermittelte Helligkeit der Abbildung des Objekts mit einem Reflektor einen voreingestellten Sollwert überschreitet oder außerhalb eines voreingestellten Sollbereichs liegt.

2. Verfahren nach Anspruch 1, **dadurch gekennzeichnet, dass** Objekte (28) in den erfassten Bildern mit Hilfe eines von einer Verarbeitungseinheit (22) abgearbeiteten Bildverarbeitungsverfahrens und/oder Verkehrszeichenerkennungsverfahrens detektiert werden, die die Abbildungen von Objekten (28) in mindestens einem von einer Bilderfassungseinheit (16) aufgenommenen Bild detektieren.

3. Verfahren nach einem der vorhergehenden Ansprüche, **dadurch gekennzeichnet, dass** als Bilderfassungseinheit (16) eine frontseitig angeordnete Stereokamera verwendet wird.

4. Verfahren nach einem der vorhergehenden Ansprüche, **dadurch gekennzeichnet, dass** mit Hilfe einer Bilderfassungseinheit (16) eine Bildfolge von Bildern mit Abbildungen des Bereichs vor dem Fahrzeug (12) aufgenommen wird, wobei die Bilderfassungseinheit (16) Bilddaten bildweise erzeugt, die mit Hilfe einer Verarbeitungseinheit (22) weiterverarbeitet werden.

5. Verfahren nach einem der vorhergehenden Ansprüche, **dadurch gekennzeichnet, dass** nur einige der mit Hilfe einer Bilderfassungseinheit (16) erfassten Bilder einer Bildfolge zum Steuern der Lichtabgabe des mindestens einen Frontscheinwerfers (26) des Fahrzeugs (12) verarbeitet werden.

6. Verfahren nach einem der vorhergehenden Ansprüche, **dadurch gekennzeichnet, dass** mit Hilfe einer weiteren Lichtquelle Infrarotlicht erzeugt und in den Erfassungsbereich einer Bilderfassungseinheit (16) abgestrahlt wird, wobei das von der Lichtquelle abgestrahlte und von dem Objekt mit einem Reflecktor (28) reflektierte Infrarotlicht von der Bilderfassungseinheit (16) erfasst und separat oder zusammen mit weiteren Bilddaten zur Detektion von Objekten mit einem Reflecktor (28) weiterverarbeitet wird.

7. Verfahren nach Anspruch 6, **dadurch gekennzeichnet, dass** das Infrarotlicht zur Beleuchtung des Nahbereichs vor dem Fahrzeug (12) dient.

8. Verfahren nach einem der vorhergehenden Ansprüche, **dadurch gekennzeichnet, dass** mit Hilfe einer Bilderfassungseinheit (16) nacheinander mehrere Bilder einer Bildfolge erfasst werden, in denen nacheinander jeweils eine Abbildung desselben Objekts (28) detektiert wird, wobei ein Objektverfolgungsverfahren zur Verfolgung eines Objekts (28) über mehrere Bilder durchgeführt wird.

9. Verfahren nach einem der vorhergehenden Ansprüche, **dadurch gekennzeichnet, dass** als Objekte mit einem Reflecktor (28) Reflektoren, wie Verkehrsschilder, Leitpfosten und/oder Warnbaken, detektiert werden.

10. Verfahren nach einem der vorhergehenden Ansprüche, **dadurch gekennzeichnet, dass** ein Sollwert oder Sollbereich voreingestellt wird, und dass überprüft wird, ob die ermittelte Helligkeit der Abbildung des Objekts (28) den Sollwert bzw. den Sollbereich nicht überschreitet, wobei der Sollbereich vorzugsweise durch einen oberen und einen unteren Sollwert begrenzt ist.

11. Verfahren nach Anspruch 10, **dadurch gekennzeichnet, dass** der Sollwert bzw. der Sollbereich abhängig von der ermittelten Helligkeit der Umgebung verändert wird.

12. Verfahren nach einem der vorhergehenden Ansprüche, **dadurch gekennzeichnet, dass** nach der Änderung des vom Frontscheinwerfer (26) abgestrahlten Lichts wiederholt die Helligkeit der Abbildung desselben Objekts (28) in einem weiteren Bild ermittelt wird, und dass überprüft wird, ob der ermittelte Helligkeitswert einen voreingestellten Sollwert oder einen voreingestellten Sollbereich unter- und/oder überschreitet.

13. Verfahren nach einem der vorhergehenden Ansprüche, **dadurch gekennzeichnet, dass** nachdem sich das detektierte Objekt (28) nicht mehr im Erfassungsbereich einer Bilderfassungseinheit (16) des Fahrzeugs (12) befindet, mindestens ein weiteres lichtreflektierendes Objekt (28) detektiert wird und dass die Lichtabgabe mindestens eines Frontscheinwerfers (26) des Fahrzeugs (12) abhängig von der ermittelten Helligkeit der Abbildung des weiteren Objekts gesteuert wird.

14. Anordnung zum Steuern der Lichtabgabe des mindestens einen Frontscheinwerfers eines Fahrzeugs,
mit einer Bilderfassungseinheit (16), die mindestens ein Bild mit einer Abbildung eines Bereichs vor dem Fahrzeug (12) erfasst und dem Bild entsprechende Bilddaten erzeugt und bereitstellt, und
mit einer Verarbeitungseinheit (22), die die bereitgestellten Bilddaten verarbeitet,
wobei die Verarbeitungseinheit (22) im erfassten Bild eine Abbildung mindestens eines Objekts (28) detektiert,
die Verarbeitungseinheit (22) überprüft, ob das detektierte Objekt (28) ein Objekt (28) mit einem Reflektor oder ein selbstleuchtendes Objekt ist,
die Verarbeitungseinheit (22) die Helligkeit der Abbildung des Objekts (28) zumindest dann ermittelt, wenn das Objekt ein Objekt (28) mit einem Reflektor ist,
**dadurch gekennzeichnet, daß** die Verarbeitungseinheit (22) die Lichtabgabe des mindestens einen Frontscheinwerfers (26) des Fahrzeugs (12) abhängig von der ermittelten Helligkeit der Abbildung des mindestens einen lichtreflektierenden Objekts (28) steuert, wobei die Intensität des durch den Frontscheinwerfer (26) abgestrahlten Lichts erhöht wird, wenn die ermittelte Helligkeit der Abbildung des Objekts mit einem Reflektor einen voreingestellten Sollwert oder einen voreingestellten Sollbereich unterschreitet, und wobei die Intensität des durch den Frontscheinwerfer (26) abgestrahlten Lichts verringert wird, wenn die ermittelte Helligkeit der Abbildung des Objekts mit einem Reflektor einen voreingestellten Sollwert überschreitet oder außerhalb eines voreingestellten Sollbereichs liegt.

## Claims

1. Method for controlling the light emission of at least one headlamp of a vehicle, wherein
at least one picture with an image of an area in front of the vehicle (12) is captured,
in the captured picture at least one image of at least one object is detected,
it is checked whether the object (28) is an object with a reflector or a self illuminating object,
at least the brightness of the image of the object (28) is determined, if the object (28) is an object with a reflector,
**characterized in that**
the light emission of the at least one headlamp (26) of the vehicle (12) is controlled dependent on the determined brightness of the image of the at least one object (28) with a reflector,
wherein the intensity of the light emitted by the headlamp (26) is increased when the determined brightness of the image of the object with a reflector falls below a preset set point or a preset selected area, and wherein the intensity of the light emitted by the headlamp (26) is reduced, when determined the brightness of the image of the object with a reflector exceeds a preset set point or lies outside a preset selected area.

2. Method according to claim 1, **characterized in that** objects (28) in the detected pictures are detected by means of an image processing method and/or traffic sign detection method executed by a processing unit (22) that detect the images of objects (28) in at least one image taken by an image detection unit (16).

3. Method according to one of the preceding claims, **characterized in that** a stereo camera that is arranged on the front is used as image detection unit (16).

4. Method according to one of the preceding claims, **characterized in that** by means of an image detection unit (16) a sequence of pictures with images of the area in front of the vehicle (12) is taken, wherein the image detection unit (16) imagewise produces image data that are processed further by means of a processing unit (22).

5. Method according to one of the preceding claims, **characterized in that** only some of the pictures of a picture sequence detected by means of an image detection unit (16) for controlling the light emission of the at least one headlamp (26) of the vehicle (12) are processed.

6. Method according to one of the preceding claims, **characterized in that** infrared light is produced by means of a further light source and is emitted in the detection area of an image detection unit (16), wherein the infrared light emitted by the light source and reflected by the object with a reflector (28) is detected by the image detection unit (16) and is processed separately or together with further image data for detection of objects with a reflector (28).

7. Method according to claim 6, **characterized in that** the infrared light serves for illumination of the immediate area in front of the vehicle (12).

8. Method according to one of the preceding claims, **characterized in that** that by means of an image detection unit (16) successively several pictures of an image sequence are captured, in each of which successively an image of the same object (28) is detected, wherein an object tracking method for tracking an object (28) is carried out over several pictures.

9. Method according to one of the preceding claims, **characterized in that** as objects with a reflector (28) reflectors such as traffic signs, guide posts and/or beacons are detected.

10. Method according to one of the preceding claims, **characterized in that** a set point or selected area is preset and that it is checked whether the determined brightness of the image of the object (28) does not exceed the set point or the selected area, wherein the selected area is preferably limited by on upper and a lower set point.

11. Method according to claim 10, **characterized in that** the set point or respectively the selected area are changed dependent on the determined brightness of the environment.

12. Method according to one of the preceding claims, **characterized in that** after change of the light emitted by the headlamp (26) repeatedly the brightness of the image of the same object (28) in another image is determined, and that it is checked, whether the determined brightness value falls below or exceeds a preset set point or a preset selected area.

13. Method according to one of the preceding claims, **characterized in that** after the detected object (28) is no longer in the detection area of an image detection unit (16) of the vehicle (12), at least one further light-reflecting object (28) is detected and that the light emission of at least one headlamp (26) of the vehicle (12) is controlled dependent on the determined brightness of the image of the further object.

14. Method for controlling the light emission of the at least one headlamp of a vehicle,
comprising an image detection unit (16) that detects at least one picture with an image of an area in front of the vehicle (12) and produces and provides image data corresponding to the image, and
a processing unit (22) that processes the image data provided,
wherein the processing unit (22) detects in the detected picture an image of at least one object (28),
the processing unit (22) checks whether the detected object (28) is an object (28) with a reflector or a self illuminating object,
the processing unit (22) at least determines the brightness of the image of the object (28) when the object is an object (28) with a reflector,
**characterized in that** the processing unit (22) controls the light emission of the at least one headlamp (26) of the vehicle (12) depending on the determined brightness of the image of the at least one light-reflecting object (28), wherein the intensity of the light emitted by the headlamp (26) is increased when the determined brightness of the image of the object with a reflector falls below a preset set point or a preset selected area, and wherein the intensity of the light emitted by the headlamp (26) is reduced when the determined brightness of the image of the object with a reflector exceeds a preset set point or lies outside a preset selected area.

## Revendications

1. Procédé de commande de l'émission de lumière d'au moins un phare avant d'un véhicule,
selon lequel au moins une image doté d'une représentation d'une zone située à l'avant du véhicule (12) est détectée,
dans l'image détectée, au moins une représentation d'au moins un objet est détectée,
il est contrôlé si l'objet (28) est un objet doté d'un réflecteur ou un objet autolumineux,
au moins la luminosité de la représentation de l'objet (28) est déterminée lorsque l'objet (28) est doté d'un réflecteur,
**caractérisé en ce que**
l'émission de lumière du ou des phares avant (26) du véhicule (12) est commandée en fonction de la luminosité déterminée de la représentation du ou des objets (28) dotés d'un réflecteur,
l'intensité de la lumière émise par le phare avant (26) est augmentée lorsque la luminosité déterminée de la représentation de l'objet doté d'un réflecteur passe au-dessous d'une valeur théorique préréglée ou d'une plage théorique préréglée, et l'intensité de la lumière émise par le phare avant (26) étant réduite lorsque la luminosité déterminée de la représentation de l'objet doté d'un réflecteur passe au-dessus d'une valeur théorique préréglée ou se situe à l'extérieur d'une plage théorique préréglée.

2. Procédé selon la revendication 1, **caractérisé en ce que** les objets (28) dans les images acquises sont détectés à l'aide d'un procédé de traitement d'image exécuté par une unité de traitement (22) et/ou d'un procédé de reconnaissance de panneau de signalisation, lesdits procédés détectant les représentations d'objets (28) dans au moins une image enregistrée par une unité d'acquisition d'images (16).

3. Procédé selon l'une quelconque des revendications précédentes, **caractérisé en ce qu'**une caméra vidéo disposée côté frontal est utilisée comme unité d'acquisition d'image (16).

4. Procédé selon l'une quelconque des revendications précédentes, **caractérisé en ce qu'**une succession d'images dotées de représentations de la zone située à l'avant du véhicule (12) sont enregistrées à l'aide d'une unité d'acquisition d'images (16), l'unité d'acquisition d'images (16) produisant image par image des données d'image retraitées à l'aide d'une unité de traitement (22).

5. Procédé selon l'une quelconque des revendications précédentes, **caractérisé en ce que** seules quelques-unes des images, acquises à l'aide d'une unité d'acquisition d'images (16), d'une succession d'images destinées à commander l'émission de lumière du ou des phares avant (26) du véhicule (12) sont traitées.

6. Procédé selon l'une quelconque des revendications précédentes, **caractérisé en ce qu'**une lumière infrarouge est produite à l'aide d'une autre source de lumière et émise dans la zone d'acquisition d'une unité d'acquisition d'images (16), la lumière infrarouge émise par la source de lumière et réfléchie par l'objet (28) doté d'un réflecteur étant acquise par l'unité d'acquisition d'images (16) et retraitée séparément des autres données d'images ou conjointement avec celles-ci pour la détection d'objets (28) dotés d'un réflecteur.

7. Procédé selon la revendication 6, **caractérisé en ce que** la lumière infrarouge sert à éclairer la zone immédiate située à l'avant du véhicule (12).

8. Procédé selon l'une quelconque des revendications précédentes, **caractérisé en ce que** plusieurs images d'une succession d'images sont acquises successivement à l'aide d'une unité d'acquisition d'images (16), images dans lesquelles respectivement une représentation du même objet (28) est successivement détectée, un procédé de poursuite d'objet étant mise en oeuvre pour suivre un objet (28) sur plusieurs images.

9. Procédé selon l'une quelconque des revendications précédentes, **caractérisé en ce que** des réflecteurs, tels que des panneaux de signalisation, des balises et/ou des poteaux avertisseurs, sont détectés en tant qu'objets (28) dotés d'un réflecteur.

10. Procédé selon l'une quelconque des revendications précédentes, **caractérisé en ce qu'**une valeur théorique ou une plage théorique est préréglée, et **en ce qu'**il est contrôlé si la luminosité déterminée de la représentation de l'objet (28) ne passe pas au-dessus de la valeur théorique ou de la plage théorique, la plage théorique étant délimitée de préférence par une valeur théorique supérieure et une valeur théorique inférieure.

11. Procédé selon la revendication 10, **caractérisé en ce que** la valeur théorique ou la plage théorique est modifiée en fonction de la luminosité déterminée des zones environnantes.

12. Procédé selon l'une quelconque des revendications précédentes, **caractérisé en ce qu'**après la modification de la lumière émise par le phare avant (26), la luminosité de la représentation du même objet (28) est déterminée à plusieurs reprises dans une autre image, et il est contrôlé si la valeur de luminosité déterminée passe au-dessous et/ou au-dessus d'une valeur théorique préréglée ou d'une plage théorique préréglée.

13. Procédé selon l'une quelconque des revendications précédentes, **caractérisé en ce qu'**après que l'objet (28) détecté ne se situe plus dans la zone d'acquisition d'une unité d'acquisition d'image (16) du véhicule (12), au moins un autre objet (28) réfléchissant la lumière est détecté et **en ce que** l'émission de lumière d'au moins un phare avant (26) du véhicule (12) est commandée en fonction de la luminosité déterminée de la représentation de l'autre objet.

14. Dispositif de commande de l'émission de lumière du ou des phares avant d'un véhicule,
comprenant une unité d'acquisition d'image (16) acquérant au moins une image dotée d'une représentation d'une zone située à l'avant du véhicule (12) et produisant et fournissant des données d'image correspondant à l'image, et
comprenant une unité de traitement (22) traitant les données d'image fournies,
l'unité de traitement (22) détectant dans l'image acquise une représentation d'au moins un objet (28),
l'unité de traitement (22) contrôlant si l'objet (28) détecté est un objet (28) doté d'un réflecteur ou un objet autolumineux,
l'unité de traitement (22) déterminant la luminosité de la représentation de l'objet (28), au moins lorsque l'objet est un objet (28) doté d'un réflecteur,
**caractérisé en ce que**
l'unité de traitement (22) commande l'émission de lumière du ou des phares avant (26) du véhicule (12) en fonction de la luminosité déterminée de la représentation de l'objet ou des objets (28) réfléchissant la lumière, l'intensité de la lumière émise par le phare avant (26) étant augmentée lorsque la luminosité déterminée de la représentation de l'objet doté d'un réflecteur passe au-dessous d'une valeur théorique préréglée ou d'une plage théorique préréglée, et l'intensité de la lumière émise par le phare avant (26) étant diminuée lorsque la luminosité déterminée de la représentation de l'objet doté d'un réflecteur passe au-dessus d'une valeur théorique préréglée ou se situe à l'extérieur d'une plage théorique préréglée.
